# EUROPEAN PATENT APPLICATION

(11) **EP 3 477 495 A1**
(43) Date of publication of application: **01.05.2019**
(21) Application number: 17904351.8
(22) Date of filing: 31.10.2017
(51) Int. Cl.: G06F 17/27

(54) **APPARATUS AND METHOD FOR EXTRACTING USER KEYWORD, AND COMPUTER-READABLE STORAGE MEDIUM**

(30) Priority: 29.08.2017 CN 201710754314
(71) Applicant: Ping An Technology (Shenzhen) Co., Ltd., Shenzhen, Guangdong (CN)
(72) Inventor: WU, ZhenYu, Shenzhen Guangdong 518000 (CN); LIU, RuiKai, Shenzhen Guangdong 518000 (CN); WANG, JianMing, Shenzhen Guangdong 518000 (CN); XIAO, Jing, Shenzhen Guangdong 518000 (CN)
(74) Representative: Becker Kurig Straus
(86) International application number: PCT/CN2017/108797
(87) International publication number: WO 2019/041521

(57) **Abstract**

The application discloses a user keyword extraction method based on a social network, including: acquiring blog posts having been posted by a target user within a preset time interval, and performing word segmentation to acquire a word list of each blog post; inputting the acquired word list corresponding to each blog post into a Word2Vec model for training to acquire a word vector model; extracting keywords corresponding to the blog posts based on a keyword extraction algorithm to form a candidate keyword set of the target user, calculating a word vector of each keyword in the candidate keyword set based on the word vector model, and constructing a semantic similarity graph; and running a Pagerank algorithm on the semantic similarity graph to score the keywords so as to acquire interest keywords of the user. This application also provides a user keyword extraction device based on a social network, and a computer-readable storage medium. This application solves a technical problem in the prior art where it is difficult to extract keywords that can effectively represent the interests of a user according to blog posts of the user.

## Description

### CLAIM OF PRIORITY

This application is based on the Paris Convention and claims priority to China Patent Application No. CN201710754314.4, filed on August 29, 2017 and entitled "User Keyword Extraction Device and Method, and Computer-Readable Storage Medium", which is hereby incorporated by reference in its entirety.

### TECHNICAL FIELD

This application relates to the technical field of computers, and more particularly relates to a user keyword extraction device and method based on a social network, and a computer-readable storage medium.

### BACKGROUND

At present, with the popularization of social networks, there are more and more applications based on social networks such as Weibo, for example, personalized recommendations for blog posts of a user. A current recommendation manner mainly includes: friend recommendations based on the same tag information, friend recommendations based on common concern, Weibo topic recommendations based on topic heat, etc. However, this recommendation manner is limited, and it is difficult to make targeted recommendations according to the interests of a user. Therefore, how to extract key words that can effectively represent the interests of a user from massive blog post data and to analyze and determine the real interests of the user is a problem to be urgently solved.

### SUMMARY

This application provides a user keyword extraction device and method based on a social network, and a computer-readable storage medium. A main objective thereof is to solve a technical problem in the prior art where it is difficult to extract key words that can effectively represent the interests of a user according to blog posts of the user.

To achieve the foregoing objective, this application provides a user keyword extraction device based on a social network. The device includes a memory and a processor, wherein a user keyword extraction program runnable on the processor is stored on the memory, and when executed by the processor, the user keyword extraction program implements the following steps:
acquiring blog posts having been posted by a target user within a preset time interval, performing word segmentation on the acquired blog posts by using a preset word segmentation tool, and acquiring a word list corresponding to each blog post respectively;
inputting the acquired word list corresponding to each blog post into a Word2Vec model for training to acquire a word vector model;
extracting, from the word list of one blog post, keywords corresponding to this blog post based on a keyword extraction algorithm, forming a candidate keyword set of the target user by the accumulated keywords corresponding to the blog posts having been posted by the target user within the preset time interval, and calculating a word vector of each keyword in the candidate keyword set based on the word vector model;
constructing a semantic similarity graph according to the candidate keyword set and the word vector corresponding to each keyword in the candidate keyword set; and
running a Pagerank algorithm on the semantic similarity graph to score each keyword, and using a keyword with a score satisfying a preset condition as an interest keyword of the target user.

Optionally, the step of constructing a semantic similarity graph according to the candidate keyword set and the word vector corresponding to each keyword in the candidate keyword set includes:
using keywords in the candidate keyword set as word nodes, wherein one keyword corresponds to one word node;
traversing all word nodes, calculating a context similarity between every two word nodes according to corresponding word vectors, and every time the context similarity between two word nodes is greater than a preset threshold, establishing an edge between the two word nodes; and
constructing the semantic similarity graph by all the word nodes and the established edges.

Optionally, the step of calculating a context similarity between every two word nodes according to corresponding word vectors includes:
acquiring word vectors of two word nodes, calculating a cosine similarity between the two word vectors, and using the cosine similarity as a context similarity between the two word nodes.

Optionally, when the number of words contained in the blog post is greater than or equal to a preset number of words, the step of extracting, from the word list of one blog post, keywords corresponding to this blog post based on a keyword extraction algorithm includes:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

Optionally, the step of using a keyword with a score satisfying a preset condition as an interest keyword of the target user includes:
using a keyword with a score greater than a preset score as an interest keyword of the target user;
or, using a keyword with a score greater than a preset score as an interest keyword of the target user, wherein when the number of keywords with scores greater than the preset score is greater than a first preset number, a second preset number of keywords in the first preset number of keywords are used as interest keywords of the target user, the first preset number being greater than the second preset number.

Furthermore, to achieve the foregoing objective, this application also provides a user keyword extraction method based on a social network, which includes the following steps:
acquiring blog posts having been posted by a target user within a preset time interval, performing word segmentation on the acquired blog posts by using a preset word segmentation tool, and acquiring a word list corresponding to each blog post respectively;
inputting the acquired word list corresponding to each blog post into a Word2Vec model for training to acquire a word vector model;
extracting, from the word list of one blog post, keywords corresponding to this blog post based on a keyword extraction algorithm, forming a candidate keyword set of the target user by the accumulated keywords corresponding to the blog posts having been posted by the target user within the preset time interval, and calculating a word vector of each keyword in the candidate keyword set based on the word vector model;
constructing a semantic similarity graph according to the candidate keyword set and the word vector corresponding to each keyword in the candidate keyword set; and
running a Pagerank algorithm on the semantic similarity graph to score each keyword, and using a keyword with a score satisfying a preset condition as an interest keyword of the target user.

Optionally, the step of constructing a semantic similarity graph according to the candidate keyword set and the word vector corresponding to each keyword in the candidate keyword set includes:
using keywords in the candidate keyword set as word nodes, wherein one keyword corresponds to one word node;
traversing all word nodes, calculating a context similarity between every two word nodes according to corresponding word vectors, and every time the context similarity between two word nodes is greater than a preset threshold, establishing an edge between the two word nodes; and
constructing the semantic similarity graph by all the word nodes and the established edges.

Optionally, the step of calculating a context similarity between every two word nodes according to corresponding word vectors includes:
acquiring word vectors of two word nodes, calculating a cosine similarity between the two word vectors, and using the cosine similarity as a context similarity between the two word nodes.

Optionally, when the number of words contained in the blog post is greater than or equal to a preset number of words, the step of extracting, from the word list of one blog post, keywords corresponding to this blog post based on a keyword extraction algorithm includes:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

Furthermore, to achieve the foregoing objective, this application also provides a computer-readable storage medium. A user keyword extraction program is stored on the computer-readable storage medium. The user keyword extraction program is executable by at least one processor to implement the following steps:
acquiring blog posts having been posted by a target user within a preset time interval, performing word segmentation on the acquired blog posts by using a preset word segmentation tool, and acquiring a word list corresponding to each blog post respectively;
inputting the acquired word list corresponding to each blog post into a Word2Vec model for training to acquire a word vector model;
extracting, from the word list of one blog post, keywords corresponding to this blog post based on a keyword extraction algorithm, forming a candidate keyword set of the target user by the accumulated keywords corresponding to the blog posts having been posted by the target user within the preset time interval, and calculating a word vector of each keyword in the candidate keyword set based on the word vector model;
constructing a semantic similarity graph according to the candidate keyword set and the word vector corresponding to each keyword in the candidate keyword set; and
running a Pagerank algorithm on the semantic similarity graph to score each keyword, and using a keyword with a score satisfying a preset condition as an interest keyword of the target user.

According to the user keyword extraction device and method based on a social network and the computer-readable storage medium provided in this application, word segmentation is performed on each blog post having been posted by a target user within a preset time interval to acquire a word list corresponding to each blog post, the word list corresponding to each blog post is input into a Word2Vec model for training to acquire a word vector model, corresponding keywords are extracted from the word lists of the blog posts based on a keyword extraction algorithm to form a candidate keyword set, a word vector of each keyword in the set is calculated based on the word vector model, a semantic similarity graph is constructed according to the keywords in the keyword set and the word vectors, a Pagerank algorithm is run on the semantic similarity graph to score the keywords, and a keyword with a score satisfying a preset condition is used as an interest keyword of the user. According to this application, key words that can effectively represent the interests of a user are extracted by virtue of the foregoing manner in conjunction with a manner of performing word segmentation on blog posts having been posted by the user.

### BRIEF DESCRIPTION OF THE ACCOMPANYING DRAWINGS

FIG. 1 is a schematic diagram of a preferred embodiment of a user keyword extraction device based on a social network in accordance with this application.
FIG. 2 is a schematic program module diagram of a user keyword extraction program in an embodiment of a user keyword extraction device based on a social network in accordance with this application.
FIG. 3 is a flowchart of a preferred embodiment of a user keyword extraction method based on a social network in accordance with this application.

Objectives, functional features, and advantages of this application will be described below in further detail in connection with the accompanying drawings.

### DETAILED DESCRIPTION OF ILLUSTRATED EMBODIMENTS

It will be appreciated that the specific embodiments described herein are merely illustrative of this application and are not intended to limit this application.

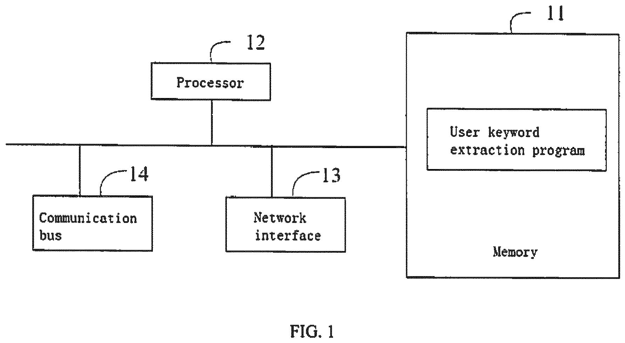

This application provides a user keyword extraction device based on a social network. Referring to FIG. 1, a schematic diagram of a preferred embodiment of a user keyword extraction device based on a social network in accordance with this application is shown.

In this embodiment, the user keyword extraction device based on a social network may be a personal computer (PC), or may be terminal equipment such as a smart phone, a tablet computer, an e-book reader, and a portable computer.

The user keyword extraction device based on a social network includes a memory 11, a processor 12, a communication bus 13, and a network interface 14.

Here, the memory 11 at least includes a type of readable storage medium, which includes a flash memory, a hard disk, a multimedia card, a card-type memory (such as an SD or DX memory), a magnetic memory, a disk, an optical disk, etc. In some embodiments, the memory 11 may be an internal memory unit of a user keyword extraction device based on a social network such as a hard disk of the user keyword extraction device based on a social network. In some other embodiments, the memory 11 may also be external memory equipment of a user keyword extraction device based on a social network such as a plug-in type hard disk, a smart media card (SMC), a secure digital (SD) card and a flash card equipped on the user keyword extraction device based on a social network. Further, the memory 11 may not only include an internal memory unit of a user keyword extraction device based on a social network, but also include external memory equipment. The memory 11 not only may be used to store application software and various data installed on the user keyword extraction device based on a social network such as program codes of a user keyword extraction program, but also may be used to temporarily store data that has been output or will be output.

In some embodiments, the processor 12 may be a central processing unit (CPU), a controller, a microcontroller, a microprocessor or other data processing chips for running program codes or processing data stored in the memory 11, e.g., executing a user keyword extraction program.

The communication bus 13 is used to realize connection communication between these components.

The network interface 14 may optionally include a standard wired interface and a wireless interface (such as a WI-FI interface), and is generally used to establish a communication connection between this device and other electronic equipment.

FIG. 1 only illustrates a user keyword extraction device based on a social network, having components 11 to 14 and a user keyword extraction program, but it will be appreciated that the implementation of all of the illustrated components is not required and more or fewer components may be implemented alternatively.

Optionally, the device may also include a user interface, the user interface may include a display, an input unit such as a keyboard, and the user interface may also optionally include a standard wired interface and a wireless interface. Optionally, in some embodiments, the display may be an LED display, a liquid crystal display, a touch liquid crystal display, an organic light-emitting diode (OLED) touch sensor, etc. Here, the display may also be appropriately referred to as a display screen or a display unit for displaying information processed in a user keyword extraction device based on a social network and for displaying a visual user interface.

In the device embodiment shown in FIG. 1, a user keyword extraction program is stored in the memory 11, and when executing the user keyword extraction program stored in the memory 11, the processor 12 implements the following steps.
A. Blog posts having been posted by a target user within a preset time interval are acquired, word segmentation is performed on the acquired blog posts by using a preset word segmentation tool, and a word list corresponding to each blog post is acquired respectively.
B. The acquired word list corresponding to each blog post is input into a Word2Vec model for training to acquire a word vector model.
C. From the word list of one blog post, keywords corresponding to this blog post are extracted based on a keyword extraction algorithm, a candidate keyword set of the target user is formed by the accumulated keywords corresponding to the blog posts having been posted by the target user within the preset time interval, and a word vector of each keyword in the candidate keyword set is calculated based on the word vector model.

In this embodiment, Weibo is taken as an example to explain the solution of this application. When it is necessary to acquire, according to the content of blog posts having been posted by a target user, keywords that can effectively reflect the hobbies and interests of the user, the blog posts having been posted by the user are acquired for word segmentation. It will be appreciated that since the hobbies and interests of the user may change with the passage of time, the posted blog posts are filtered in time dimension in order to improve the accuracy of keyword extraction, a preset time interval is set, and only blog posts posted within this period of time are analyzed. For example, only blog posts having been posted in the past year are analyzed. Of course, in other embodiments, when there are few blog posts having been posted by a user within a preset time interval, all blog posts having been posted by the user in the past may also be analyzed.

After the blog posts of the target user are acquired, a word segmentation tool is used to perform word segmentation on each of the acquired blog posts one by one. For example, a word segmentation tool such as a Stanford Chinese word segmentation tool and a jieba word segmentation tool is used for word segmentation. For example, word segmentation is performed on a blog post "I went to the movies last night", so as to obtain the following result: "I|went|to|the|movies|last|night". After the word segmentation, the word segmentation result is retained. Further, in order to further improve the effectiveness of keywords, only verbs and/or nouns in the word segmentation result are retained, and the words such as adverbs and adjectives that cannot represent the interests of a user are removed. For example, in the foregoing example, only the word "movies" may be retained. It will be appreciated that if the word segmentation result is null, corresponding blog posts are filtered out, a corresponding word list can be obtained for each blog post of which the word segmentation result is not null, and the word lists corresponding to all blog posts within the foregoing time interval are input into a Word2Vec model for training to obtain a word vector model which is used to convert a keyword into a word vector. The Word2Vec model is a tool for word vector calculation. There is a mature calculation method for training the model and using it to calculate a word vector of a word, so it will not be repeated here.

Next, a keyword extraction algorithm is used to perform keyword extraction on each blog post. For example, any one of keyword extraction algorithms such as a term frequency-inverse document frequency (TF-IDF) algorithm, a latent semantic analysis (LSA) algorithm or a probabilistic latent semantic analysis (PLSA) algorithm is used to calculate the word list of each blog post, one or more words with the highest score are used as keywords corresponding to the blog post, and the foregoing word vector model is used to convert each keyword into a corresponding word vector. Or, as an implementation manner, keyword extraction is performed in combination with a plurality of keyword extraction algorithms. Specifically, the step of extracting, from the word list of one blog post, keywords corresponding to this blog post based on a keyword extraction algorithm includes: extracting, from the word list of one blog post, keywords according to a plurality of preset keyword extraction algorithms respectively; and using repeated keywords in the keywords extracted according to the plurality of keyword extraction algorithms as keywords corresponding to this blog post. For example, keywords are extracted once according to the TF-IDF algorithm, the LSA algorithm, or the PLSA algorithm respectively, and then the keywords of the overlapped portion are used as keywords corresponding to this blog post.

Since the content of a blog post is generally relatively short, when the foregoing keyword extraction algorithm is applied to keyword extraction of the blog post, the extracted keywords are very noisy and too broad generally, and it is difficult to accurately reflect the interests of a user. Therefore, in this embodiment, keywords are extracted from a large number of blog posts by adopting the foregoing keyword extraction algorithm and used as candidate keywords, a candidate keyword set is established, and then the keyword set is processed according to a subsequent algorithm to acquire keywords that can reflect the interests of the user therefrom.
D. A semantic similarity graph is constructed according to the candidate keyword set and the word vector corresponding to each keyword in the candidate keyword set.

A candidate keyword set of the target user is formed by keywords corresponding to each blog post having been posted by the target user within the foregoing preset time interval, and a word vector of each keyword in the set is calculated by using the foregoing word vector model. A semantic similarity graph is constructed according to the foregoing candidate keyword set and word vector.

The step of constructing a semantic similarity graph according to the candidate keyword set and the word vector corresponding to each keyword in the candidate keyword set may include the following detailed steps: using keywords in the candidate keyword set as word nodes, wherein one keyword corresponds to one word node; traversing all word nodes, calculating a context similarity between every two word nodes according to corresponding word vectors, and every time the context similarity between two word nodes is greater than a preset threshold, establishing an edge between the two word nodes; and constructing the semantic similarity graph by all the word nodes and the established edges.

Here, when a context similarity is calculated, word vectors of two word nodes are acquired, a cosine similarity between the two word vectors is calculated, and the cosine similarity is used as a context similarity between the two word nodes. Here, the edges established between the word nodes may be directed edges or undirected edges, where the direction of the directed edges may be a direction of an early word node pointing to a late word node. They have different advantages. The characteristic of the directed edges is that when the Pagerank algorithm is run, it is necessary to perform iterative calculation with a slightly larger amount of calculation. The advantage is that the de-noising effect is good. For example, after a user is analyzed, obtained keywords are: Cristiano Ronaldo, Real Madrid, La Liga, Football, and Lottery, wherein regardless of a pointing direction of the first four words in the semantic similarity graph, a mutual promotion function will be formed in a Pagerank algorithm score, so even if some words such as snacks establish directed edges with other words, it is not promoted in the iterations, so that a score for "lottery" is relatively low, and this word may be excluded. For the undirected edges, the calculation speed when running the Pagerank algorithm is high, and it is unnecessary to perform iterative calculation, but the de-noising effect is not very good. For example, in the foregoing example, the word "lottery" may not be excluded. In other embodiments, the semantic similarity between two words may also be calculated in other manners such as a method for calculating a semantic similarity based on a large-scale corpus. The method for calculating a semantic similarity based on a large-scale corpus is a mature method for calculating a semantic similarity between words. The specific principle will not be repeated here.
E. A Pagerank algorithm is run on the semantic similarity graph to score each keyword, and a keyword with a score satisfying a preset condition is used as an interest keyword of the target user.

The Pagerank algorithm is run on the semantic similarity graph to score each word node. A larger Pagerank value of a word node indicates more other word nodes (in the case of directed edges) pointing to the word node on the graph or more other word nodes (in the case of undirected edges) connected with the word node, and further indicates a relatively high similarity between more other word nodes and the word node on the graph, so keywords corresponding to the word node can more reflect the interests of a user. Therefore, a keyword with a higher score is used as an interest keyword of the target user. Specifically, the step of using a keyword with a score satisfying a preset condition as an interest keyword of the target user may include:
using a keyword with a score greater than a preset score as an interest keyword of the target user;
or, using a keyword with a score greater than a preset score as an interest keyword of the target user, wherein when the number of keywords with scores greater than the preset score is greater than a first preset number, a second preset number of keywords in the first preset number of keywords are used as interest keywords of the target user, the first preset number being greater than the second preset number.

It will be appreciated that parameters needing to be preset, such as the preset threshold, the preset number of words, the first preset number and the second preset number, involved in each of the foregoing embodiments may be set by a user according to actual conditions.

According to the user keyword extraction device based on a social network provided in the foregoing embodiment, word segmentation is performed on each blog post having been posted by a target user within a preset time interval to acquire a word list corresponding to each blog post, the word list corresponding to each blog post is input into a Word2Vec model for training to acquire a word vector model, corresponding keywords are extracted from the word lists of the blog posts based on a keyword extraction algorithm to form a candidate keyword set, a word vector of each keyword in the set is calculated based on the word vector model, a semantic similarity graph is constructed according to the keywords in the keyword set and the word vectors, a Pagerank algorithm is run on the semantic similarity graph to score the keywords, and a keyword whose score satisfies a preset condition is used as an interest keyword of the user. According to this application, key words that can effectively represent the interests of a user are extracted by virtue of the foregoing manner in conjunction with a manner of performing word segmentation on blog posts having been posted by the user.

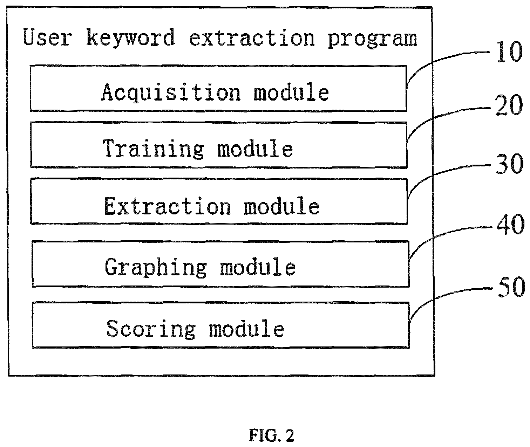

Optionally, in other embodiments, the user keyword extraction program may also be divided into one or more modules which are stored in the memory 11 and executed by one or more processors (processor 12 in this embodiment), so as to complete this application. The modules referred to in this application refer to a series of computer program instruction segments capable of completing a specific function. For example, referring to FIG. 2, a schematic program module diagram of a user keyword extraction program in an embodiment of a user keyword extraction device based on a social network in accordance with this application is shown. In this embodiment, the user keyword extraction program may be divided into an acquisition module 10, a training module 20, an extraction module 30, a graphing module 40, and a scoring module 50, illustratively:
the acquisition module 10 is used to acquire blog posts having been posted by a target user within a preset time interval, perform word segmentation on the acquired blog posts by using a preset word segmentation tool, and acquire a word list corresponding to each blog post respectively;
the training module 20 is used to input the acquired word list corresponding to each blog post into a Word2Vec model for training to acquire a word vector model;
the extraction module 30 is used to extract, from the word list of one blog post, keywords corresponding to this blog post based on a keyword extraction algorithm, form a candidate keyword set of the target user by the accumulated keywords corresponding to the blog posts having been posted by the target user within the preset time interval, and calculate a word vector of each keyword in the candidate keyword set based on the word vector model;
the graphing module 40 is used to construct a semantic similarity graph according to the candidate keyword set and the word vector corresponding to each keyword in the candidate keyword set; and
the scoring module 50 is used to run a Pagerank algorithm on the semantic similarity graph to score each keyword, and use a keyword with a score satisfying a preset condition as an interest keyword of the target user.

The functions or operation steps implemented by executing the acquisition module 10, the training module 20, the extraction module 30, the graphing module 40 and the scoring module 50 are substantially the same as those in the foregoing embodiments, and will not be repeated here.

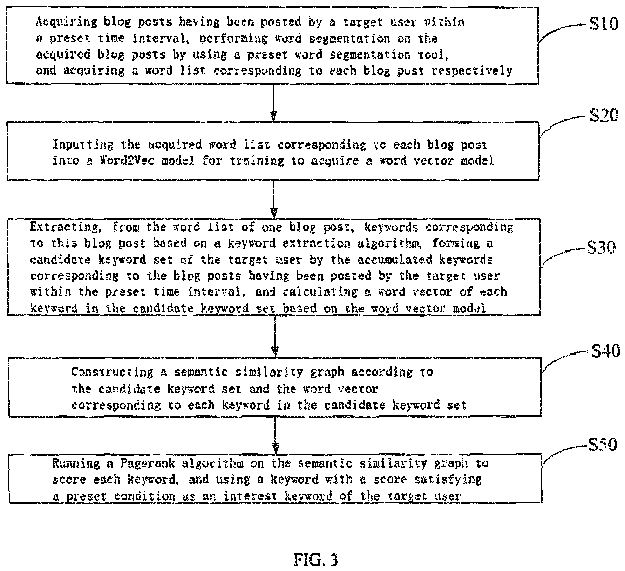

Furthermore, this application also provides a user keyword extraction method based on a social network. Referring to FIG. 3, a flowchart of a preferred embodiment of a user keyword extraction method based on a social network in accordance with this application is shown. The method may be executed by a device which may be implemented by software and/or hardware.

In this embodiment, the user keyword extraction method based on a social network includes the steps as follows.

In step S10, blog posts having been posted by a target user within a preset time interval are acquired, word segmentation is performed on the acquired blog posts by using a preset word segmentation tool, and a word list corresponding to each blog post is acquired respectively.

In step S20, the acquired word list corresponding to each blog post is input into a Word2Vec model for training to acquire a word vector model.

In step S30, from the word list of one blog post, keywords corresponding to this blog post are extracted based on a keyword extraction algorithm, a candidate keyword set of the target user is formed by the accumulated keywords corresponding to the blog posts having been posted by the target user within the preset time interval, and a word vector of each keyword in the candidate keyword set is calculated based on the word vector model. In this embodiment, Weibo is taken as an example to explain the solution of this application. When it is necessary to acquire, according to the content of blog posts having been posted by a target user, keywords that can effectively reflect the hobbies and interests of the user, the blog posts having been posted by the user are acquired for word segmentation. It will be appreciated that since the hobbies and interests of the user may change with the passage of time, the posted blog posts are filtered in time dimension in order to improve the accuracy of keyword extraction, a preset time interval is set, and only blog posts posted within this period of time are analyzed. For example, only blog posts having been posted in the past year are analyzed. Of course, in other embodiments, when there are few blog posts having been posted by a user within a preset time interval, all blog posts having been posted by the user in the past may also be analyzed.

After the blog posts of the target user are acquired, a word segmentation tool is used to perform word segmentation on each of the acquired blog posts one by one. For example, a word segmentation tool such as a Stanford Chinese word segmentation tool and a jieba word segmentation tool is used for word segmentation. For example, word segmentation is performed on a blog post "I went to the movies last night", so as to obtain the following result: "I|went|to|the|movies|last|night". After the word segmentation, the word segmentation result is retained. Further, in order to further improve the effectiveness of keywords, only verbs and/or nouns in the word segmentation result are retained, and the words such as adverbs and adjectives that cannot represent the interests of a user are removed. For example, in the foregoing example, only the word "movies" may be retained. It will be appreciated that if the word segmentation result is null, corresponding blog posts are filtered out, a corresponding word list can be obtained for each blog post of which the word segmentation result is not null, and the word lists corresponding to all blog posts within the foregoing time interval are input into a Word2Vec model for training to obtain a word vector model which is used to convert a keyword into a word vector. The Word2Vec model is a tool for word vector calculation. There is a mature calculation method for training the model and using it to calculate a word vector of a word, so it will not be repeated here.

Next, a keyword extraction algorithm is used to perform keyword extraction on each blog post. For example, any one of keyword extraction algorithms such as a term frequency-inverse document frequency (TF-IDF) algorithm, a latent semantic analysis (LSA) algorithm or a probabilistic latent semantic analysis (PLSA) algorithm is used to calculate the word list of each blog post, one or more words with the highest score are used as keywords corresponding to the blog post, and the foregoing word vector model is used to convert each keyword into a corresponding word vector. Or, as an implementation manner, keyword extraction is performed in combination with a plurality of keyword extraction algorithms. Specifically, the step of extracting, from the word list of one blog post, keywords corresponding to this blog post based on a keyword extraction algorithm includes: extracting, from the word list of one blog post, keywords according to a plurality of preset keyword extraction algorithms respectively; and using repeated keywords in the keywords extracted according to the plurality of keyword extraction algorithms as keywords corresponding to this blog post. For example, keywords are extracted once according to the TF-IDF algorithm, the LSA algorithm, or the PLSA algorithm respectively, and then the keywords of the overlapped portion are used as keywords corresponding to this blog post.

Since the content of a blog post is generally relatively short, when the foregoing keyword extraction algorithm is applied to keyword extraction of the blog post, the extracted keywords are very noisy and too broad generally, and it is difficult to accurately reflect the interests of a user. Therefore, in this embodiment, keywords are extracted from a large number of blog posts by adopting the foregoing keyword extraction algorithm and used as candidate keywords, a candidate keyword set is established, and then the keyword set is processed according to a subsequent algorithm to acquire keywords that can reflect the interests of the user therefrom.

In step S40, a semantic similarity graph is constructed according to the candidate keyword set and the word vector corresponding to each keyword in the candidate keyword set.

A candidate keyword set of the target user is formed by keywords corresponding to each blog post having been posted by the target user within the foregoing preset time interval, and a word vector of each keyword in the set is calculated by using the foregoing word vector model. A semantic similarity graph is constructed according to the foregoing candidate keyword set and word vector.

The step of constructing a semantic similarity graph according to the candidate keyword set and the word vector corresponding to each keyword in the candidate keyword set may include the following detailed steps: using keywords in the candidate keyword set as word nodes, wherein one keyword corresponds to one word node; traversing all word nodes, calculating a context similarity between every two word nodes according to corresponding word vectors, and every time the context similarity between two word nodes is greater than a preset threshold, establishing an edge between the two word nodes; and constructing the semantic similarity graph by all the word nodes and the established edges.

Here, when a context similarity is calculated, word vectors of two word nodes are acquired, a cosine similarity between the two word vectors is calculated, and the cosine similarity is used as a context similarity between the two word nodes. Here, the edges established between the word nodes may be directed edges or undirected edges, wherein the direction of the directed edges may be a direction of an early word node pointing to a late word node. They have different advantages. The characteristic of the directed edges is that when the Pagerank algorithm is run, it is necessary to perform iterative calculation with a slightly larger amount of calculation. The advantage is that the de-noising effect is good. For example, after a user is analyzed, obtained keywords are: Cristiano Ronaldo, Real Madrid, La Liga, Football, and Lottery, wherein regardless of a pointing direction of the first four words in the semantic similarity graph, a mutual promotion function will be formed in a Pagerank algorithm score, so even if some words such as snacks establish directed edges with other words, it is not promoted in the iterations, so that a score for "lottery" is relatively low, and this word may be excluded. For the undirected edges, the calculation speed when running the Pagerank algorithm is high, and it is unnecessary to perform iterative calculation, but the de-noising effect is not very good. For example, in the foregoing example, the word "lottery" may not be excluded. In other embodiments, the semantic similarity between two words may also be calculated in other manners such as a method for calculating a semantic similarity based on a large-scale corpus. The method for calculating a semantic similarity based on a large-scale corpus is a mature method for calculating a semantic similarity between words. The specific principle will not be repeated here.

In step S50, a Pagerank algorithm is run on the semantic similarity graph to score each keyword, and a keyword with a score satisfying a preset condition is used as an interest keyword of the target user.

The Pagerank algorithm is run on the semantic similarity graph to score each word node. A larger Pagerank value of a word node indicates more other word nodes (in the case of directed edges) pointing to the word node on the graph or more other word nodes (in the case of undirected edges) connected with the word node, and further indicates a relatively high similarity between more other word nodes and the word node on the graph, so keywords corresponding to the word node can more reflect the interests of a user. Therefore, a keyword with a higher score is used as an interest keyword of the target user. Specifically, the step of using a keyword with a score satisfying a preset condition as an interest keyword of the target user may include:
using a keyword with a score greater than a preset score as an interest keyword of the target user;
or, using a keyword with a score greater than a preset score as an interest keyword of the target user, wherein when the number of keywords with scores greater than the preset score is greater than a first preset number, a second preset number of keywords in the first preset number of keywords are used as interest keywords of the target user, the first preset number being greater than the second preset number.

It will be appreciated that parameters needing to be preset, such as the preset threshold, the preset number of words, the first preset number and the second preset number, involved in each of the foregoing embodiments may be set by a user according to actual conditions.

According to the user keyword extraction method based on a social network provided in the foregoing embodiment, word segmentation is performed on each blog post having been posted by a target user within a preset time interval to acquire a word list corresponding to each blog post, the word list corresponding to each blog post is input into a Word2Vec model for training to acquire a word vector model, corresponding keywords are extracted from the word lists of the blog posts based on a keyword extraction algorithm to form a candidate keyword set, a word vector of each keyword in the set is calculated based on the word vector model, a semantic similarity graph is constructed according to the keywords in the keyword set and the word vectors, a Pagerank algorithm is run on the semantic similarity graph to score the keywords, and a keyword whose score satisfies a preset condition is used as an interest keyword of the user. According to this application, key words that can effectively represent the interests of a user are extracted by virtue of the foregoing manner in conjunction with a manner of performing word segmentation on blog posts having been posted by the user.

Furthermore, the embodiments of this application also provide a computer-readable storage medium. A user keyword extraction program is stored on the computer-readable storage medium. The user keyword extraction program is executable by one or more processors to implement the following operation:
acquiring blog posts having been posted by a target user within a preset time interval, performing word segmentation on the acquired blog posts by using a preset word segmentation tool, and acquiring a word list corresponding to each blog post respectively;
inputting the acquired word list corresponding to each blog post into a Word2Vec model for training to acquire a word vector model;
extracting, from the word list of one blog post, keywords corresponding to this blog post based on a keyword extraction algorithm, forming a candidate keyword set of the target user by the accumulated keywords corresponding to the blog posts having been posted by the target user within the preset time interval, and calculating a word vector of each keyword in the candidate keyword set based on the word vector model;
constructing a semantic similarity graph according to the candidate keyword set and the word vector corresponding to each keyword in the candidate keyword set; and
running a Pagerank algorithm on the semantic similarity graph to score each keyword, and using a keyword with a score satisfying a preset condition as an interest keyword of the target user.

Further, when executed by the processor, the user keyword extraction program also implements the following operation:
using keywords in the candidate keyword set as word nodes, wherein one keyword corresponds to one word node;
traversing all word nodes, calculating a context similarity between every two word nodes according to corresponding word vectors, and every time the context similarity between two word nodes is greater than a preset threshold, establishing an edge between the two word nodes; and
constructing the semantic similarity graph by all the word nodes and the established edges.

Further, when executed by the processor, the user keyword extraction program also implements the following operation:
acquiring word vectors of two word nodes, calculating a cosine similarity between the two word vectors, and using the cosine similarity as a context similarity between the two word nodes.

Further, when executed by the processor, the user keyword extraction program also implements the following operation:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

The specific implementation manners of the computer-readable storage medium of this application are substantially the same as all embodiments of the user keyword extraction device and method based on a social network, and will not be repeated here.

It should be noted that the foregoing numbering of embodiments of this application is intended for illustrative purposes only, and is not indicative of the pros and cons of these embodiments. Moreover, the terms "including", "containing", or any other variations thereof herein are intended to cover a non-exclusive inclusion, such that a process, method, article, or device including a series of elements includes not only such elements, but also other elements that are not explicitly listed, or elements that are inherent to such process, method, article, or device. In the case of no more limitations, the presence of another identical element in a process, method, article, or device including an element defined by a sentence "including a ..." is not excluded.

By the description of the foregoing implementation manners, it will be evident to those of skill art that the methods according to the foregoing embodiments can be implemented by means of software plus the necessary general-purpose hardware platform; they can of course be implemented by hardware, but in many cases the former will be more advantageous. Based on such an understanding, the essential technical solution of this application, or the portion that contributes to the prior art may be embodied as software products. Computer software products can be stored in a storage medium (e.g., a ROM/RAM, a magnetic disk, or an optical disc) and may include multiple instructions that, when executed, can cause terminal equipment (e.g., a mobile phone, a computer, a server, an air conditioner, or network equipment), to execute the methods described in the various embodiments of this application.

The foregoing description merely depicts preferred embodiments of this application and therefore is not intended as limiting the patentable scope of this application. Any equivalent configurational or flow transformations that are made taking advantage of the specification and drawing content of this application and that are used directly or indirectly in any other related technical field shall all fall within the scope of patent protection of this application.

## Claims

1. A user keyword extraction device based on a social network, comprising a memory and a processor, wherein a user keyword extraction program runnable on the processor is stored on the memory, and when executed by the processor, the user keyword extraction program implements the following steps:
acquiring blog posts having been posted by a target user within a preset time interval, performing word segmentation on the acquired blog posts by using a preset word segmentation tool, and acquiring a word list corresponding to each blog post respectively;
inputting the acquired word list corresponding to each blog post into a Word2Vec model for training to acquire a word vector model;
extracting, from the word list of one blog post, keywords corresponding to this blog post based on a keyword extraction algorithm, forming a candidate keyword set of the target user by the accumulated keywords corresponding to the blog posts having been posted by the target user within the preset time interval, and calculating a word vector of each keyword in the candidate keyword set based on the word vector model;
constructing a semantic similarity graph according to the candidate keyword set and the word vector corresponding to each keyword in the candidate keyword set; and
running a Pagerank algorithm on the semantic similarity graph to score each keyword, and using a keyword with a score satisfying a preset condition as an interest keyword of the target user.

2. The user keyword extraction device based on a social network of claim 1, wherein the step of constructing a semantic similarity graph according to the candidate keyword set and the word vector corresponding to each keyword in the candidate keyword set comprises:
using keywords in the candidate keyword set as word nodes, wherein one keyword corresponds to one word node;
traversing all word nodes, calculating a context similarity between every two word nodes according to corresponding word vectors, and every time the context similarity between two word nodes is greater than a preset threshold, establishing an edge between the two word nodes; and
constructing the semantic similarity graph by all the word nodes and the established edges.

3. The user keyword extraction device based on a social network of claim 2, wherein the step of calculating a context similarity between every two word nodes according to corresponding word vectors comprises:
acquiring word vectors of two word nodes, calculating a cosine similarity between the two word vectors, and using the cosine similarity as a context similarity between the two word nodes.

4. The user keyword extraction device based on a social network of claim 1, wherein when the number of words contained in the blog post is greater than or equal to a preset number of words, the step of extracting, from the word list of one blog post, keywords corresponding to this blog post based on a keyword extraction algorithm comprises:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

5. The user keyword extraction device based on a social network of claim 2, wherein when the number of words contained in the blog post is greater than or equal to a preset number of words, the step of extracting, from the word list of one blog post, keywords corresponding to this blog post based on a keyword extraction algorithm comprises:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

6. The user keyword extraction device based on a social network of claim 1, wherein the step of using a keyword with a score satisfying a preset condition as an interest keyword of the target user comprises:
using a keyword with a score greater than a preset score as an interest keyword of the target user;
or, using a keyword with a score greater than a preset score as an interest keyword of the target user, wherein when the number of keywords with scores greater than the preset score is greater than a first preset number, a second preset number of keywords in the first preset number of keywords are used as interest keywords of the target user, the first preset number being greater than the second preset number.

7. The user keyword extraction device based on a social network of claim 2, wherein the step of using a keyword with a score satisfying a preset condition as an interest keyword of the target user comprises:
using a keyword with a score greater than a preset score as an interest keyword of the target user;
or, using a keyword with a score greater than a preset score as an interest keyword of the target user, wherein when the number of keywords with scores greater than the preset score is greater than a first preset number, a second preset number of keywords in the first preset number of keywords are used as interest keywords of the target user, the first preset number being greater than the second preset number.

8. A user keyword extraction method based on a social network, comprising:
acquiring blog posts having been posted by a target user within a preset time interval, performing word segmentation on the acquired blog posts by using a preset word segmentation tool, and acquiring a word list corresponding to each blog post respectively;
inputting the acquired word list corresponding to each blog post into a Word2Vec model for training to acquire a word vector model;
extracting, from the word list of one blog post, keywords corresponding to this blog post based on a keyword extraction algorithm, forming a candidate keyword set of the target user by the accumulated keywords corresponding to the blog posts having been posted by the target user within the preset time interval, and calculating a word vector of each keyword in the candidate keyword set based on the word vector model;
constructing a semantic similarity graph according to the candidate keyword set and the word vector corresponding to each keyword in the candidate keyword set; and
running a Pagerank algorithm on the semantic similarity graph to score each keyword, and using a keyword with a score satisfying a preset condition as an interest keyword of the target user.

9. The user keyword extraction method based on a social network of claim 8, wherein the step of constructing a semantic similarity graph according to the candidate keyword set and the word vector corresponding to each keyword in the candidate keyword set comprises:
using keywords in the candidate keyword set as word nodes, wherein one keyword corresponds to one word node;
traversing all word nodes, calculating a context similarity between every two word nodes according to corresponding word vectors, and every time the context similarity between two word nodes is greater than a preset threshold, establishing an edge between the two word nodes; and
constructing the semantic similarity graph by all the word nodes and the established edges.

10. The user keyword extraction method based on a social network of claim 9, wherein the step of calculating a context similarity between every two word nodes according to corresponding word vectors comprises:
acquiring word vectors of two word nodes, calculating a cosine similarity between the two word vectors, and using the cosine similarity as a context similarity between the two word nodes.

11. The user keyword extraction method based on a social network of claim 8, wherein when the number of words contained in the blog post is greater than or equal to a preset number of words, the step of extracting, from the word list of one blog post, keywords corresponding to this blog post based on a keyword extraction algorithm comprises:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

12. The user keyword extraction method based on a social network of claim 9, wherein when the number of words contained in the blog post is greater than or equal to a preset number of words, the step of extracting, from the word list of one blog post, keywords corresponding to this blog post based on a keyword extraction algorithm comprises:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

13. The user keyword extraction method based on a social network of claim 8, wherein the step of using a keyword with a score satisfying a preset condition as an interest keyword of the target user comprises:
using a keyword with a score greater than a preset score as an interest keyword of the target user;
or, using a keyword with a score greater than a preset score as an interest keyword of the target user, wherein when the number of keywords with scores greater than the preset score is greater than a first preset number, a second preset number of keywords in the first preset number of keywords are used as interest keywords of the target user, the first preset number being greater than the second preset number.

14. The user keyword extraction method based on a social network of claim 9, wherein the step of using a keyword with a score satisfying a preset condition as an interest keyword of the target user comprises:
using a keyword with a score greater than a preset score as an interest keyword of the target user;
or, using a keyword with a score greater than a preset score as an interest keyword of the target user, wherein when the number of keywords with scores greater than the preset score is greater than a first preset number, a second preset number of keywords in the first preset number of keywords are used as interest keywords of the target user, the first preset number being greater than the second preset number.

15. A computer-readable storage medium, wherein a user keyword extraction program is stored on the computer-readable storage medium, and the user keyword extraction program is executable by at least one processor to implement the following steps:
acquiring blog posts having been posted by a target user within a preset time interval, performing word segmentation on the acquired blog posts by using a preset word segmentation tool, and acquiring a word list corresponding to each blog post respectively;
inputting the acquired word list corresponding to each blog post into a Word2Vec model for training to acquire a word vector model;
extracting, from the word list of one blog post, keywords corresponding to this blog post based on a keyword extraction algorithm, forming a candidate keyword set of the target user by the accumulated keywords corresponding to the blog posts having been posted by the target user within the preset time interval, and calculating a word vector of each keyword in the candidate keyword set based on the word vector model;
constructing a semantic similarity graph according to the candidate keyword set and the word vector corresponding to each keyword in the candidate keyword set; and
running a Pagerank algorithm on the semantic similarity graph to score each keyword, and using a keyword with a score satisfying a preset condition as an interest keyword of the target user.

16. The computer-readable storage medium of claim 15, wherein the step of constructing a semantic similarity graph according to the candidate keyword set and the word vector corresponding to each keyword in the candidate keyword set comprises:
using keywords in the candidate keyword set as word nodes, wherein one keyword corresponds to one word node;
traversing all word nodes, calculating a context similarity between every two word nodes according to corresponding word vectors, and every time the context similarity between two word nodes is greater than a preset threshold, establishing an edge between the two word nodes; and
constructing the semantic similarity graph by all the word nodes and the established edges.

17. The computer-readable storage medium of claim 16, wherein the step of calculating a context similarity between every two word nodes according to corresponding word vectors comprises:
acquiring word vectors of two word nodes, calculating a cosine similarity between the two word vectors, and using the cosine similarity as a context similarity between the two word nodes.

18. The computer-readable storage medium of claim 15, wherein when the number of words contained in the blog post is greater than or equal to a preset number of words, the step of extracting, from the word list of one blog post, keywords corresponding to this blog post based on a keyword extraction algorithm comprises:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

19. The computer-readable storage medium of claim 16, wherein when the number of words contained in the blog post is greater than or equal to a preset number of words, the step of extracting, from the word list of one blog post, keywords corresponding to this blog post based on a keyword extraction algorithm comprises:
extracting, from the word list of one blog post, keywords according to a plurality of preset keyword extraction algorithms respectively; and
using repeated keywords in the keywords extracted according to the plurality of keyword extraction algorithms as keywords corresponding to this blog post.

20. The computer-readable storage medium of claim 15, wherein the step of using a keyword with a score satisfying a preset condition as an interest keyword of the target user comprises:
using a keyword with a score greater than a preset score as an interest keyword of the target user;
or, using a keyword with a score greater than a preset score as an interest keyword of the target user, wherein when the number of keywords with scores greater than the preset score is greater than a first preset number, a second preset number of keywords in the first preset number of keywords are used as interest keywords of the target user, the first preset number being greater than the second preset number.
